# EUROPÄISCHE PATENTANMELDUNG

(11) **EP 0 869 293 A1**
(43) Veröffentlichungstag der Anmeldung: **07.10.1998**
(21) Anmeldenummer: 98250103.3
(22) Anmeldetag: 26.03.1998
(51) Int. Cl.: F16D 65/78, B60T 11/18

(54) **Hydraulische Bremsanlage**

(30) Priorität: 02.04.1997 DE 19714920
(71) Anmelder: Bellach-Vulpius, Christian, 14612 Falkensee (DE)
(72) Erfinder: Bellach-Vulpius, Christian, 14612 Falkensee (DE)
(74) Vertreter: Wablat, Wolfgang, Dr.Dr.

(57) **Zusammenfassung**

Bei einer hydraulischen Bremsanlage für Kraftfahrzeuge mit einem an den Hauptbremszylinder (1) angeschlossenen Vorratsbehälter (3) für die Hydraulikflüssigkeit ist während des Fahrbetriebs zwischen zwei Bremsvorgängen eine zusätzliche hydraulische Druckmittelverbindung (11) mit einer Zwangsströmung vom Vorratsbehälter (3) zum Druckraum des Radbremszylinders (6) geschaltet. Nach dem Bremsen wird dadurch die in den Vorratsbehälter zurückgeführte erhitzte und dampfblasenbeladene Hydraulikflüssigkeit entlüftet und abgekühlt. Außerdem wird die Kühlung des Bremskolbens (9) und damit der Reiborgane der Bremse verbessert.

## Beschreibung

Die Erfindung betrifft eine hydraulische Bremsanlage für Kraftfahrzeuge, mit einem an einen Vorratsbehälter für die Hydraulikflüssigkeit angeschlossenen Hauptbremszylinder, der über eine Druckmittelleitung mit mindestens einem Radbremszylinder, an dessen Bremskolben auf die Fahrzeugräder wirkende Reiborgane vorgesehen sind, hydraulisch verbunden ist, sowie mit einem Spülkreis zum Abführen erhitzter Hydraulikflüssigkeit.

Beim Abbremsen von Kraftfahrzeugen wird eine hohe kinetische Energie in Reibungswärme umgesetzt, die von den Reiborganen der Bremse, zum Beispiel den Bremsbacken bei einer Backenbremse oder den Reibplatten bei einer Scheibenbremse, auf den Bremskolben des Bremszylinders und von diesem auf die Hydraulikflüssigkeit übertragen wird. Die hohe thermische Belastung der Hydraulikflüssigkeit führt jedoch durch die Bildung von Dampfblasen, die insbesondere bei der Entspannung der Bremsflüssigkeit entstehen, zu einer Beeinträchtigung der Funktion der Bremsanlage, da durch die Dampfblasen die Kompressibilität der Hydraulikflüssigkeit deutlich erhöht wird. Besonders alte, einen hohen Wasseranteil aufweisende Bremsflüssigkeit neigt bei hohen Temperaturen zu einer starken Dampfblasenbildung.

Es sind beispielsweise aus der DE 15 30 681 hydraulische Bremsanlagen mit einem oder mehreren Spülkreisen bekannt, bei denen der Bremsflüssigkeitsstrom von einer im Druckkreis liegenden Hydraulikpumpe erzeugt wird und über einen Einkreis-Hauptzylinder an die Spannorgane der Räder gelangt. Mit Hilfe von Rückschlagventilen wird ein gerichteter Umlauf der erhitzten Bremsflüssigkeit durch einen in den Kreislauf geschalteten Kühler erzielt, um in den Radbremszylindern einer Verdampfung der überhitzten Bremsflüssigkeit entgegenzuwirken. Durch die Anordnung der Pumpe im Druckkreis ist diese dem vollen Bremsdruck ausgesetzt und muß daher entsprechend aufwendig abgedichtet sein. Auch der Kühler muß entsprechend seiner Anordnung im Druckkreis entsprechend dimensioniert und ausgebildet sein, so daß hohe Anlagekosten auftreten. Ein wesentlicher Nachteil besteht weiterhin darin, daß die Hydraulikflüssigkeit im Nachlaufraum und im Ausgleichbehälter des Hauptbremszylinders nicht in den Hydraulikflüssigkeitskreislauf einbezogen ist und somit eine Vermischung mit der sich im Nachlaufbehälter und im Ausgleichsraum befindlichen Bremsflüssigkeit verhindert wird.

Der Erfindung liegt daher die Aufgabe zugrunde, eine mit einem Spülkreis für die Hydraulikflüssigkeit gekoppelte hydraulische Bremsanlage für Kraftfahrzeuge zu entwickeln, die bei geringem Anlagen und Platzaufwand eine effektive Kühlung der Reiborgane und Regenerierung der Hydraulikflüssigkeit gewährleistet.

Erfindungsgemäß wird die Aufgabe bei einer hydraulischen Bremsanlage gemäß dem Oberbegriff des Patentanspruchs 1 in der Weise gelöst, daß während des Fahrbetriebes zwischen zwei Bremsvorgängen eine zusätzliche hydraulische Druckmittelverbindung mit einer Zwangsströmung vom Vorratsbehälter zum Druckraum des Radbremszylinders geschaltet ist.

Nach einem Bremsvorgang wird somit Druckmittel mit Hilfe einer Pumpe im Kreislauf vom Vorratsbehälter über die zweite Druckmittelleitung, den Druckraum des Radbremszylinders, die erste Druckmittelleitung (Bremsleitung) und den Hauptbremszylinders zurück zum Vorratsbehälter geführt. Dadurch wird die erhitzte, mit Dampfblasen angereicherte Bremsflüssigkeit zum Zeitpunkt ihrer Entspannung und der dadurch in verstärktem Maße bedingten Dampfblasenentstehung in den mit der Atmosphäre verbundenen Vorratsbehälter gedrückt, aus dem die Dampfblasen nach außen entweichen können. Die Druckflüssigkeit in der ersten Druckmittelleitung sowie im Haupt- und im Radbremszylinder wird dadurch entlüftet und ihre Wärmeenergie von der Druckflüssigkeit im Vorratsbehälter aufgenommen.

Außerdem wird nach dem Bremsen kühle Druckflüssigkeit über eine große Bremskolbenflache durch den im Radbremszylinder auf der Druckseite verbleibenden Raum geleitet, so daß ein erheblicher Teil der von den Reiborganen auf den Bremskolben übertragenen Wärme abgeführt werden kann.

Letztlich ist somit jederzeit eine störfreie Bremswirkung gewährleitstet. Gleichzeitig kann die Bremsanlage bei Verringerung des Gewichts und der ungefederten Massen kleiner und kostengünstiger ausgeführt werden, wobei eine freiere Gestaltung des Felgendesigns möglich ist.

Das Nachführen der kühlen Druckflüssigkeit aus dem Vorratsbehälter in den Bremszylinder erfolgt über die zweite Druckmittelleitung, in die eine Hydraulikpumpe und ein Überdruckventil sowie ein als Rückschlagventil wirkendes Sicherheitssperrventil zum Unterbrechen der Druckmittelzufuhr aus dem Vorratsbehälter während des Bremsvorgangs eingebunden ist.

Nach einer bevorzugten Ausführungsform der Erfindung wird die Druckflüssigkeit aus dem Vorratsbehälter über einen Wärmetauscher geleitet, um so deren intensive Kühlung zu bewirken.

Gemäß einem weiteren Merkmal der Erfindung ist in dem Vorratsbehälter für die Druckflüssigkeit, und zwar zwischen dessen Verbindungsöffnung mit dem Hauptbremszylinder und dem Anschluß der zweiten Druckmittelleitung, eine Trennwand angeordnet, die dafür sorgt, daß die in den Vorratsbehälter eintretenden Dampfblasen nicht wieder durch die Hydraulikpumpe abgesaugt werden, sondern tatsächlich bis zur Flüssigkeitsoberfläche im Vorratsbehälter gelangen und entweichen können.

In weiterer Ausgestaltung der Erfindung ist der Bremskolben im Radbremszylinder im Druckmittelbereich als offener Hohlkörper ausgebildet, so daß dieser eine große Fläche zur Wärmeübertragung auf das Druckmittel bildet. Gleichzeitig entsteht durch diese Hohlkörperausbildung im Bereich des oberen Totpunkts des Bremskolbens ein ausreichend großer Raum, um nach einem Bremsvorgang in der oberen Kolbenstellung kalte Hydraulikflüssigkeit über die Kolbenfläche leiten zu können.

Die Hydraulikpumpe ist während des Fahrzeugbetriebs, also auch während eines Bremsvorgangs, ständig eingeschaltet. Die abgepumpte Hydraulikflüssigkeit wird aufgrund des in dieser Zeit geschlossenen Sicherheitssperrventils über das Überdruckventil und eine dritte Druckmittelleitung in den Vorratsbehälter zurückgeführt.

Weitere Merkmale und vorteilhafte Ausgestaltungen der Erfindung sind in den Unteransprüchen aufgeführt.

Ein Ausführungsbeispiel der Erfindung wird anhand der Zeichnung näher erläutert. Es zeigen:

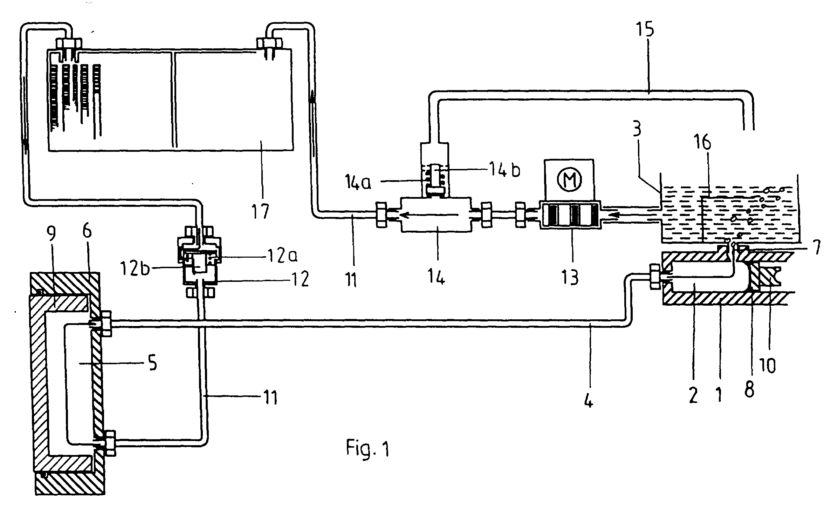

- Fig. 1: eine schematische Darstellung einer hydraulischen Bremsanlage während der Umwälzung und Entlüftung der Hydraulikflüssigkeit zwischen zwei Bremsvorgängen;
- Fig. 2: die gleiche Bremsanlage wie in Fig. 1, jedoch bei unterbrochener Flüssigkeitsumwälzung und Entlüftung während einer Bremsperiode; und
- Fig. 3: die Bremsanlage entsprechend den Figuren 1 und 2, jedoch im Ruhezustand des Fahrzeugs und wenn die Zündanlage außer Betrieb ist.

Die hydraulische Bremsanlage umfaßt einen Hauptbremszylinder 1, dessen Zylinderraum 2 in seinem Boden über eine erste Druckmittelleitung (Bremsleitung) 4 an den Zylinderraum 5 eines Radbremszylinders 6 angeschlossen ist, während in der Seitenwand des Hauptbremszylinders 1 eine Nachlaufbohrung 7 vorgesehen ist, über die der Zylinderraum 2 mit einem die Hydraulikflüssigkeit aufnehmenden Vorratsbehälter 3 verbunden ist. Im Hauptbremszylinder 1 befindet sich ein Kolben 8, der bei einem Bremsvorgang über eine Druckstange 10 und ein nicht dargestelltes Bremspedal zum Boden des Hauptbremszylinders 1 hin bewegbar ist.

Bei Bewegung des Kolbens 8 durch Betätigung des Bremspedals wird die Nachlaufbohrung 7 in der Zylinderwand des Hauptbremszylinders 1 durch den Kolben 8 geschlossen, so daß aus dem Vorratsbehälter 3 keine Hydraulikflüssigkeit in den Zylinderraum 2 nachfließen kann.

Im Bremszylinder 6 ist ein Bremskolben 9 geführt, an dem auf der nicht mit der Hydraulikflüssigkeit beaufschlagten Seite die Reiborgane (nicht dargestellt) einer Scheiben- oder einer Backenbremse angeschlossen sind. Der Bremskolben 9 ist als zur Seite der eintretenden Hydraulikflüssigkeit hin offener Hohlkörper ausgebildet, so daß eine große Wärmeübergangsfläche geschaffen wird.

Der Zylinderraum 5 (Druckraum) des Bremszylinders 6 ist noch mit einer zweiten Druckmittelleitung 11 verbunden, die an ihrem gegenüberliegenden Ende an den Vorratsbehälter 3 angeschlossen ist. In die zweite Druckmittelleitung 11 sind auf der Seite des Radbremszylinders 6 ein Sicherheitssperrventil 12 und auf der Seite des Vorratsbehälters 3 eine Hydraulikpumpe 13 und ein dieser nachgeschaltetes Überdruckventil 14 eingebunden. Vom Überdruckventil 14 führt eine dritte Druckmittelleitung 15 zurück zum Vorratsbehälter 3. Die zweite Druckmittelleitung 11 ist an einer tief-liegenden Stelle an den Vorratsbehälter 3 angeschlossen. Außerdem ist die Anschlußöffnung des Vorratsbehälters 3 an die zweite Druckmittelleitung 11 gegenüber der Nachlaufbohrung 7 durch eine kurz unterhalb des Flüssigkeitsspiegels endende, abgewinkelte Trennwand 16 abgeschirmt. In die den Vorratsbehälter 3 und den Radbremszylinder 6 verbindende zweite Druckmittelleitung 11 ist außerdem ein Wärmetauscher 17 geschaltet.

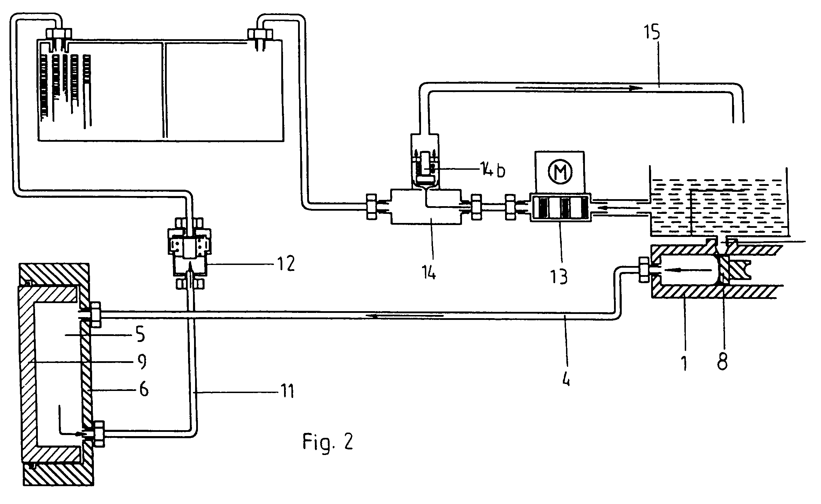

In der Zeichnung ist die Bremsanlage der Einfachheit halber immer nur mit einem Radbremszylinder 6 wiedergegeben. Selbstverständlich können an den Hauptbremszylinder 1 auch mehrere Radbremszylinder angeschlossen sein, wodurch sich jedoch nichts am Prinzip der vorliegenden Lösung ändert. Die Funktion der hydraulischen Bremsanlage während eines Bremsvorgangs wird anhand der Fig. 2 beschrieben. Durch Betätigung des Fußbremspedals (nicht dargestellt) wird über die Druckstange 10 auf den Kolben 8 - und damit auf die Hydraulikflüssigkeit im Zylinderraum 2 des Hauptbremszylinders 1 - eine Kraft ausgeübt, die über die Hydraulikflüssigkeit in der ersten Druckmittelleitung 4 zum Bremskolben 9 und über diesen zu den Reiborganen (nicht dargestellt) der Bremse weitergeleitet wird. Die beim Bremsvorgang entstehende Wärme wird auf den Bremskolben 9 und von diesem auf die Hydraulikflüssigkeit übertragen. Während des Bremsvorgangs ist die Nachlaufbohrung 7 im Hauptbremszylinder 1 durch die Seitenwand des Kolbens 8 verschlossen, und die zweite Druckmittelleitung 11 ist durch den von einer Feder 12a und der Hydraulikflüssigkeit auf den Ventilkolben 12b ausgeübten Druck verschlossen. Währenddessen fördert die Hydraulikpumpe 13 Hydraulikflüssigkeit aus dem Vorratsbehälter 3 in die zweite Druckmittelleitung 11. Durch den bei geschlossenem Sicherheitssperrventil 12 erzeugten Gegendruck wird das Überdruckventil 14 entgegen der Wirkung einer Feder 14a geöffnet, so daß die während des Bremsvorgangs geförderte Hydraulikflüssigkeit über die dritte Druckmittelleitung 15 in den Vorratsbehälter 3 zurückfließt. Die während des Fahrzeugbetriebs ständig eingeschaltete Hydraulikpumpe 13 hat bei einem Bremsvorgang nur einen geringen Druck, nämlich den der Feder 14a des Überdruckventils, zu überwinden und auch der Wärmetauscher 17 wird nicht auf Druck beansprucht und kann daher entsprechend einfach dimensioniert sein.

Bei Beendigung des Bremszustandes wird der Druck der erhitzten Hydraulikflüssigkeit plötzlich verringert, so daß auch deren Siedetemperatur deutlich herabgesetzt wird und es zum Sieden der Hydraulikflüssigkeit - verbunden mit einer starken Dampblasenentwicklung - kommen kann und bei einem nachfolgenden Bremsvorgang die zur Kraftübertragung erforderliche Inkompressibilität der Hydraulikflüssigkeit und damit die Bremswirkung beeinträchtigt wäre.

Bei diesem - in Fig. 2 dargestellten - Zustand der Bremsanlage wird jedoch das Sicherheitssperrventil 12 aufgrund des verringerten Drucks in der ersten Druckmittelleitung 4 und des durch die Hydraulikpumpe 13 erzeugten Förderdrucks entgegen der Kraft der Feder 12a geöffnet. Dabei ist die Kraft der Feder 12a geringer als die der Feder 14a des Überdruckventils 14, so daß dieses geschlossen bleibt. Außerdem ist der Kolben 8 im Hauptbremszylinder 1 nach Entlastung des Bremspedals wieder in seine die Nachlaufbohrung 7 zum Vorratsbehälter 3 freigebende Ausgangsstellung zurückgegangen. Somit wird sofort nach Beendigung des Bremsvorgangs kalte Hydraulikflüssigkeit aus dem Vorratsbehälter 3 durch die Druckmittelleitung 11 und über den im Radbremszylinder 6 verbleibenden Zylinderraum 5 gefördert, so daß die heiße, dampfblasenbeladene Hydraulikflüssigkeit über die erste Druckmittelleitung 4, den Hauptbremszylinder 1 und die Nachlaufbohrung 7 in den Vorratsbehälter 3 gelangt und die mit der heißen Flüssigkeit eingebrachten Dampfblasen nach außen entweichen können. Durch diesen Entlüftungsvorgang ist die Inkompressibilität der Hydraulikflüssigkeit und damit die Funktionsfähigkeit der Bremsanlage wiederhergestellt. Die heiße Bremsflüssigkeit wird mit der kalten Hydraulikflüssigkeit im Vorratsbehälter 3 vermischt und solange umgewälzt, bis der nächste Bremsvorgang eingeleitet wird. Der Bremskolben 9 wird dadurch weiter intensiv gekühlt. Die Bremszylinder können entsprechend kleiner und mit geringerem Gewicht ausgeführt und wesentlich kostengünstiger hergestellt werden.

Damit die in den Vorratsbehälter eintretenden Dampfblasen nicht wieder in die zweite Druckmittelleitung 11 abgesaugt werden, befindet sich im Vorratsbehälter 3 zwischen der Nachlaufbohrung 7 und dem Anschluß der zweiten Druckmittelleitung 11 eine unterhalb der Flüssigkeitsoberfläche seit-lich abgewinkelte Trennwand 16. Die erwärmte Hydraulikflüssigkeit wird über den Wärmetauscher 17 geleitet und dadurch während des Entlüftungszyklus weiter abgekühlt. Bei erneutem Betätigen des Bremspedals wird der Hydraulikflüssigkeitskreislauf durch Schließen des Sicherheitssperrventils 12 und der Nachlaufbohrung 7 sofort unterbrochen, so daß mit einer regenerierten - dampfblasenfreien und abgekühlten - Hydraulikflüssigkeit eine zuverlässige Bremswirkung erzielt werden kann.

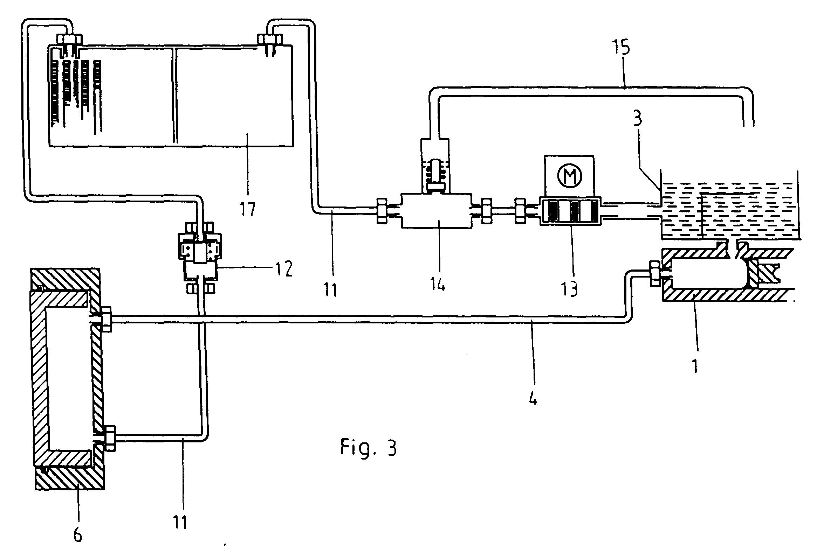

Fig. 3 zeigt schließlich die erfindungsgemäße Bremsanlage im Ruhezustand, d.h. bei ausgeschalteter Zündung oder einer ausgefallenen Hydraulikpumpe. In diesem Fall arbeitet die Vorrichtung wie eine herkömmliche Bremsanlage, d.h. es wird keine Hydraulikflüssigkeit aus dem Vorratsbehälter 3 abgesaugt und das Sicherheitssperrventil 12 bleibt durch den Druck der Feder 12a und den Flüssigkeitsdruck beim Betätigen des Bremspedals ständig geschlossen.

Die Erfindung ist sebstverständlich nicht auf das vorliegende Ausführungsbeispiel, insbesondere die Anzahl, Anordnung und Ausbildung der beschriebenen Bauelemente der Bremsanlage beschränkt. Wesentlich ist, daß neben der herkömmlichen Druckmittelleitung zwischen Hauptbremszylinder und Radbremszylinder eine weitere Verbindungsleitung zwischen dem Hydraulikflüssigkeitsvorratsbehälter und dem jeweiligen Radbremszylinder besteht, wobei in dieser zusätzlichen Verbindungsleitung dem Vorratsbehälter eine Pumpe, ein Überdruckventil und ein Rückschlagventil nachgeschaltet sind.

### Bezugszeichenliste

- 1: Hauptbremszylinder
- 2: Zylinderraum
- 3: Vorratsbehälter
- 4: erste Druckmittelleitung (Bremsleitung)
- 5: Druckraum (Zylinderraum)
- 6: Radbremszylinder
- 7: Nachlaufbohrung
- 8: Kolben von 1
- 9: Bremskolben
- 10: Druckstange
- 11: zweite Druckmittelleitung
- 12: Sicherheitssperrventil (Rückschlagventil)
- 12a: Feder
- 12b: Ventilkolben
- 13: Hydraulikpumpe
- 14: Überdruckventil
- 14a: Feder
- 14b: Ventilkolben
- 15: dritte Druckmittelleitung
- 16: Trennwand
- 17: Wärmetauscher

## Patentansprüche

1. Hydraulische Bremsanlage für Kraftfahrzeuge, mit einem an einen Vorratsbehälter für die Hydraulikflüssigkeit angeschlossenen Hauptbremszylinder, der über eine Druckmittelleitung mit mindestens einem Radbremszylinder, an dessen Bremskolben auf die Fahrzeugräder wirkende Reiborgane vorgesehen sind, hydraulisch verbunden ist, sowie mit einem Spülkreis zum Abführen erhitzter Hydraulikflüssigkeit, dadurch gekennzeichnet, daß während des Fahrbetriebs zwischen zwei Bremsvorgängen eine zusätzliche hydraulische Druckmittelverbindung mit einer Zwangsströmung vom Vorratsbehälter (3) zum Druckraum des Radbremszylinders (6) geschaltet ist.

2. Hydraulische Bremsanlage nach Anspruch 1, dadurch gekennzeichnet, daß die zusätzliche hydraulische Verbindung eine zweite Druckmittelleitung (11) ist, in die auf der Seite des Vorratsbehälters (3) eine Hydraulikpumpe (13) und auf der Seite des Radbremszylinders (6) ein zwischen den Bremsvorgängen die Strömung zu diesem freigebendes Rückschlagventil eingebunden ist.

3. Hydraulische Bremsanlage nach Anspruch 2, dadurch gekennzeichnet, daß das Rückschlagventil ein Sicherheitssperrventil (12) ist, dessen Ventilkolben (12b) durch eine Feder (12a) und den im Radbremszylinder (6) aufgebauten hydraulischen Druck entgegen der Strömungsrichtung beaufschlagbar ist.

4. Hydraulische Bremsanlage nach einem der Ansprüche 1 bis 3, dadurch gekennzeichnet, daß der Hydraulikpumpe (13) in Strömungsrichtung ein in die zweite Druckmittelleitung (11) eingebundenes Überdruckventil (14) nachgeschaltet ist, dessen Überdrucköffnung über eine dritte Druckmittelleitung (15) in den Vorratsbehälter (3) mündet.

5. Hydraulische Bremsanlage nach Anspruch 3 und 4, dadurch gekennzeichnet, daß ein Ventilkolben (14b) des Überdruckventils (14) durch eine Feder (14a) in Schließstellung gehalten ist, deren Federkraft größer als die der Feder (12a) des Sicherheitssperrventils (12) ist.

6. Hydraulische Bremsanlage nach einem der Ansprüche 1 bis 5, dadurch gekennzeichnet, daß die zweite Druckmittelleitung (11) bodennah an den Vorratsbehälter (3) angeschlossen ist.

7. Hydraulische Bremsanlage nach einem der Ansprüche 1 bis 6, dadurch gekennzeichnet, daß im Vorratsbehälter (3) der Anschluß der zweiten Druckmittelleitung (11) und eine den Vorratsbehälter (3) und den Hauptbremszylinder (1) verbindende Nachlaufbohrung (7) durch eine wenig unterhalb der Flüssigkeitsoberfläche liegende Trennwand (16) gegeneinander abgeschirmt sind.

8. Hydraulische Bremsanlage nach Anspruch 7, dadurch gekennzeichnet, daß die Trennwand (16) in Richtung der im Boden des Vorratsbehälters (3) befindlichen Verbindung mit dem Hauptbremszylinder (1) seitlich abgewinkelt ist.

9. Hydraulische Bremsanlage nach einem der Ansprüche 1 bis 8, dadurch gekennzeichnet, daß in die zweite Druckmittelleitung (11) ein Wärmetauscher (17) eingebunden ist.

10. Hydraulische Bremsanlage nach Anspruch 1, dadurch gekennzeichnet, daß der Bremskolben (9) als zum Druckraum des Radbremszylinders (6) hin offener Hohlkörper ausgebildet ist und auf der anderen Kolbenseite eine großflächige Verbindung mit dem betreffenden Reiborgan besteht.
